# EUROPÄISCHE PATENTANMELDUNG

(11) **EP 0 942 632 A1**
(43) Veröffentlichungstag der Anmeldung: **15.09.1999**
(21) Anmeldenummer: 99104508.9
(22) Anmeldetag: 06.03.1999
(51) Int. Cl.: H05B 39/00

(54) **Optoelektronischer Tageslichtsensor**

(30) Priorität: 13.03.1998 DE 19811015
(71) Anmelder: Vishay Semiconductor GmbH, 74072 Heilbronn (DE)
(72) Erfinder: Schöberl, Werner, 74252 Massenbachhausen (DE); Dermitzakis, Stefan, 74078 Heilbronn (DE)
(74) Vertreter: Kolb, Georg

(57) **Zusammenfassung**

Die Erfindung betrifft einen optoelektronischen Tageslichtsensor mit einer strahlungsempfindlichen Empfängereinheit. Die Tageslichtsensoren werden für Beleuchtungen benötigt, die sich automatisch bei Tag aus- und bei Einbruch der Nacht einschalten. Als Empfängereinheit werden Silizium-Fotoempfänger verwendet. Die Silizium-Fotoempfänger weisen ein breites Empfangsspektrum auf und müssen daher mit einem Filter versehen werden. Bei dieser Erfindung wird als Empfänger für den Tageslichtsensor ein Halbleitersender verwendet, wie z.B. eine lichtemittierende Diode oder eine Infrarotdiode, die nahezu monochromatische Strahlung mit einem sehr engen Wellenlängenbereich erzeugen. Diese eigentlichen Senderbausteine erzeugen bei der Bestrahlung mit Licht bzw. Strahlung, die in ihrem Wellenlängenbereich liegen, gleichfalls wie die Silizium-Fotoempfänger eine Fotospannung. Dadurch entfällt der Gebrauch von Filtern. Des weiteren ist die Fotospannung so hoch, daß damit direkt ein Transistor angesteuert werden kann, der gleichfalls für den Tageslichtsensor benötigt wird. Auch werden bei dieser Erfindung vorteilhafte Schaltungen für derartige Tageslichtsensoren offenbart.

## Beschreibung

**Die Erfindung betrifft** einen optoelektronischen Tageslichtsensor gemäß dem Oberbegriff des Patentanspruchs 1 und eine Beleuchtungseinrichtung mit einem optoelektronischen Tageslichtsensor.

Tageslichtsensoren werden für Beleuchtungseinrichtungen benötigt. Die Tageslichtsensoren befinden sich in oder an der Beleuchtungseinrichtung und dienen dazu das Tageslicht zu erkennen, um die Beleuchtungseinrichtung automatisch bei Tagesanbruch aus- bzw. bei Einbruch der Nacht einzuschalten. Durch die Tageslichtsensoren wird Energie eingespart, da die Beleuchtungseinrichtung nicht die ganze Zeit, sondern nur bei tatsächlichem Bedarf also bei Dunkelheit betrieben wird. Auch das manuelle oder zeitgesteuerte Ein- und Ausschalten entfällt, wodurch die Zuverlässigkeit und auch die Lebensdauer einer solchen Beleuchtungseinrichtung erhöht wird.

Das Grundproblem beim Tageslichtsensor besteht darin, ein eindeutiges Unterscheidungskriterium zwischen dem Tageslicht und dem Kunstlicht, das durch die Beleuchtungseinrichtung erzeugt wird, zu finden. Bei Tageslichtsensoren wird zur Differenzierung das unterschiedliche Strahlungsspektrum der beiden Beleuchtungsquellen ausgenutzt. Die Unterschiede liegen bei gutem (dem sichtbaren Tageslicht sehr ähnlichen) Kunstlicht im unsichtbaren Bereich. Hierbei ist vor allem der Infrarotbereich interessant, da für diesen Bereich kostengünstige Detektoreinrichtungen zur Verfügung stehen. Bestandteil eines herkömmlichen Tageslichtsensors ist ein Silizium-Fotoempfänger. Dieser Detektor ist entweder eine einfache, nicht verstärkende Fotodiode oder ein verstärkender Fototransisistor. Das Infrarotspektrum von Kunstlicht enthält im Gegensatz zum Tageslicht nicht alle Infrarotwellenlängen. Diese fehlende Wellenlänge im Spektrum dient als Unterscheidungskriterium für den Tageslichtsensor. Der Silizium-Fotoempfänger, der eigentlich ein breites Empfangsspektrum aufweist, wird durch einen Filter auf diese Wellenlänge bzw. auf diesen Wellenlängenbereich eingestellt. Das heißt, der Fotoempfänger ist nur bei dieser Wellenlänge bzw. in diesem Wellenlängenbereich aktiv. Wird im Silizium Fotoempfänger ein Signal erzeugt, so bedeutet dies, daß Strahlung mit der besagten Wellenlänge, die nur im Tageslicht enthalten ist, auf die fotoempfindliche Fläche des Empfängers eingefallen ist. Übersteigt dieses Signal einen definierten Minimumwert, so ist das Tageslicht intensiv genug, um die künstliche Beleuchtung auszuschalten oder deren Lichtstrom zu reduzieren. Hauptsächlich werden die Tageslichtsensoren in Sparlampen verwendet. Diese Quecksilber-Sparlampen haben nur im Infrarotbereich bei 1040 nm eine hohe Strahlstärke. Der typische Bereich der spektralen Empfindlichkeit ist bei den Silizium-Fotoempfängern sehr breit mit λ_{0,5} = 570 nm - 1040 nm. Daher werden ein oder mehrere Filter benötigt, die am Fotoempfänger verhindern, daß weder durch das sichtbare Licht noch durch die langwellige Strahlung im Bereich der Quecksilberlinie des Kunstlichtes mit λ ≈ 1040 nm ein Signal erzeugt wird. Der Filter wird im Bereich von ca. 800 nm - 950 nm durchlässig sein, so daß nur der betreffende Infrarotanteil des Tageslichts ein Signal am Fotoempfänger erzeugen kann. Überschreitet die Höhe des Signals einen definierten Minimumwert, so wird die Beleuchtung ausgeschaltet. Unterschreitet die Höhe des Signals diesen Minimumwert, so wird die Beleuchtung eingeschaltet.

**Nachteilig** hierbei ist jedoch, daß die spektrale Empfindlichkeit von Silizium-Fotoempfängern einen breiten Wellenlängenbereich umfaßt und daher immer Filter benötigt werden. Ein weiterer Nachteil ist die niedrige Fotospannung von derartigen Empfängern, die typisch zwischen 300 mV und 400 mV liegen. Ein weiterer Nachteil ergibt sich bei der Verwendung von optoelektronischen Tageslichtsensoren mit Fotoempfängern in Beleuchtungseinrichtungen, da für den Tageslichtsensor und die Beleuchtungseinrichtung unterschiedliche Spannungsquellen benötigt werden.

Der Erfindung liegt daher die **Aufgabe** zugrunde, einen Tageslichtsensor und eine damit ausgestattete Beleuchtungseinrichtung aufzuzeigen, der die aufgeführten Nachteile nicht aufweist.

Die Aufgabe wird erfindungsgemäß durch die Merkmale im Kennzeichen des Patentanspruchs 1 **gelöst.** Hierbei wird nicht wie bisher üblich ein Silizium-Fotoempfänger verwendet, sondern es wird eine Halbleiter-Sendediode als Empfänger verwendet. Im Standardbetrieb, also bei Stromfluß, emittieren die Halbleiter-Sendedioden eine nahezu monochromatische Strahlung. Jedoch wird in dieser Anwendung der Umkehreffekt ausgenutzt. Fällt Strahlung mit der gleichen Wellenlänge, wie sie von der Diode im Sendebetrieb emittiert wird, auf die Sendediode ein, so baut sich eine Fotospannung auf.

Die **Vorteile** einer solchen Anordnung sind die automatische Filterwirkung und die hohe Fotospannung.

Weitere **vorteilhafte Weiterbildungen** ergeben sich aus den Unteransprüchen. Hier werden vorteilhafte Beschaltungen im Tageslichtsensor offenbart. Auch lassen sich derartige optische Tageslichtsensoren einfach in verschiedenen Beleuchtungseinrichtungen integrieren und können gegebenenfalls aus der gleichen Spannungsquelle versorgt werden.

Im folgenden soll die Erfindung anhand von Ausführungsbeispielen im Zusammenhang mit den Zeichnungen dargestellt und erläutert werden.
- **Figur 1:**: Prinzipschaltung eines Tageslichtempfängers
- **Figur 2:**: Erste Variante mit zwei in Reihe geschalteten Sendedioden
- **Figur 3:**: Zweite Variante mit zwei parallelgeschalteten Sendedioden
- **Figur 4:**: Komplettschaltung für einen Tageslichtsensor
- **Figur 5:**: Variante einer Komplettschaltung mit Zenerdiode

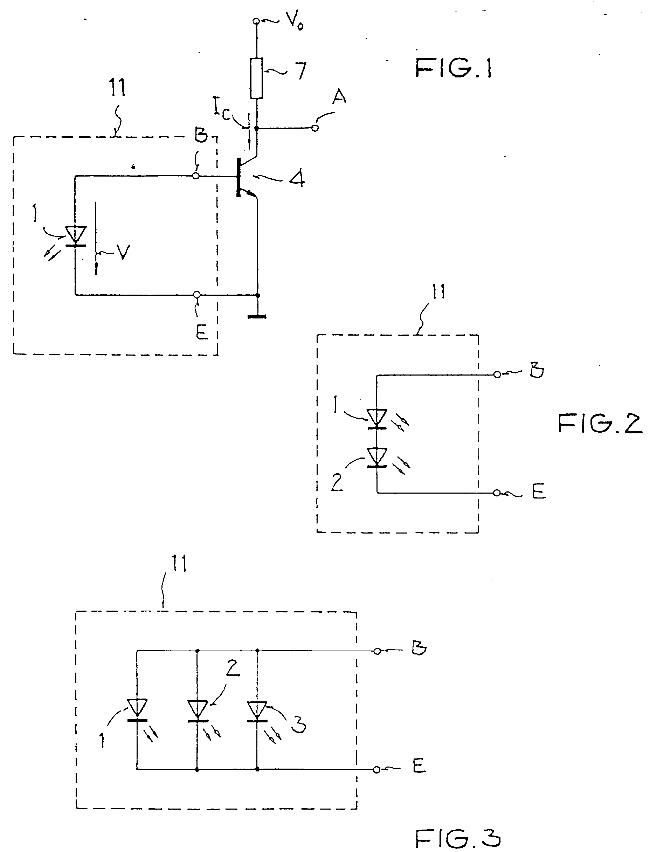

**Figur 1** zeigt eine Prinzipschaltung für einen optoelektronischen Tageslichtsensor. Die Versorgungsspannung V₀ wird über einen Widerstand **7** an den Kollektor eines NPN-Transistors **4** angelegt. Die Basis des Transistors **4** ist mit der Anode der Infrarot-Sendediode **1** verbunden. Die Kathode der Infrarot-Sendediode **1** ist zusammen mit dem Emitter des Transistors **4** an Masse angeschlossen. Die Infrarot-Sendediode **1** bildet die lichtempfindliche Einheit **11** zwischen den Punkten **B** und **E** des optoelektronischen Tageslichtsensors. Am Ausgang **A**, der sich zwischen dem Widerstand **7** und dem Kollektor des Transistors **4** befindet, wird das durch das Tageslicht erzeugte Stromsignal abgegriffen.
Hierbei wird die Infrarot-Sendediode **1** als Empfänger verwendet. Diese Infrarot-Sendediode **1** strahlt im Standardbetrieb also bei Stromfluß infrarotes Licht mit einer Peakwellenlänge von λ_{P} = 870 nm aus. Im gezeigten Anwendungsbeispiel ist die Infrarot-Sendediode **1** jedoch nicht im Sendebetrieb, das heißt, sie wird nicht von einem Strom durchflossen, sondern sie dient als Spannungsquelle zwischen Basis und Emitter des NPN-Transistors **4**. Fällt bei dieser Betriebsart Strahlung im Bereich der Peakwellenlänge λ_{P} = 870 nm auf die Sendediode **1**, so baut sich eine Spannung **V** auf. Die Fotospannung **V** der Infrarot-Sendediode ist relativ groß und beträgt ca. 0,6 V bis über 1 V. Diese Photospannung ist ausreichend groß, um mit nur einer Infrarot-Sendediode den Transistor anzusteuern. Die Spannung bewirkt am NPN-Transistor **4** einen Kollektorstromfluß I_{C}. Dieser kann am Ausgang **A** abgegriffen werden. Von Bedeutung ist hierbei, daß nur Tageslicht Strahlung in diesem Wellenlängenbereich aufweist und Kunstlicht, insbesondere Quecksilber-Sparlampen, diese Strahlung mit dieser Wellenlänge nicht erzeugen. Des weiteren ist die Strahlungsempfindlichkeit der als Empfänger genutzten Infrarot-Sendedioden auf einen sehr engen Bereich begrenzt. Strahlungsfilter werden nicht mehr benötigt. Werden Infrarot-Sendedioden als Empfänger verwendet, so ist deren Empfindlichkeit auf Tageslicht sehr hoch und die Empfindlichkeit auf Kunstlicht nur sehr gering.

**Figur 2** zeigt eine Variante der Prinzipschaltung von Figur 1. Hierbei bilden mehrere Infrarot-Sendedioden **1**, **2** die lichtempfindliche Einheit **11** zwischen den Punkten **B** und **E** des optoelektronischen Tageslichtsensors. Die Infrarot-Sendedioden **1**, **2** sind in Reihe geschaltet. Dadurch wird bei einfallendem Tageslicht eine höhere Spannung zwischen Basis und Emitter des Transistors **4** erzeugt. Ersetzt diese empfindliche Einheit **11**, die in Figur 1 beschriebene Einheit, so erhöht sich der Kollektorstrom I_{C} durch die höhere Basis-Emitterspannung. Das System wird dadurch empfindlicher.

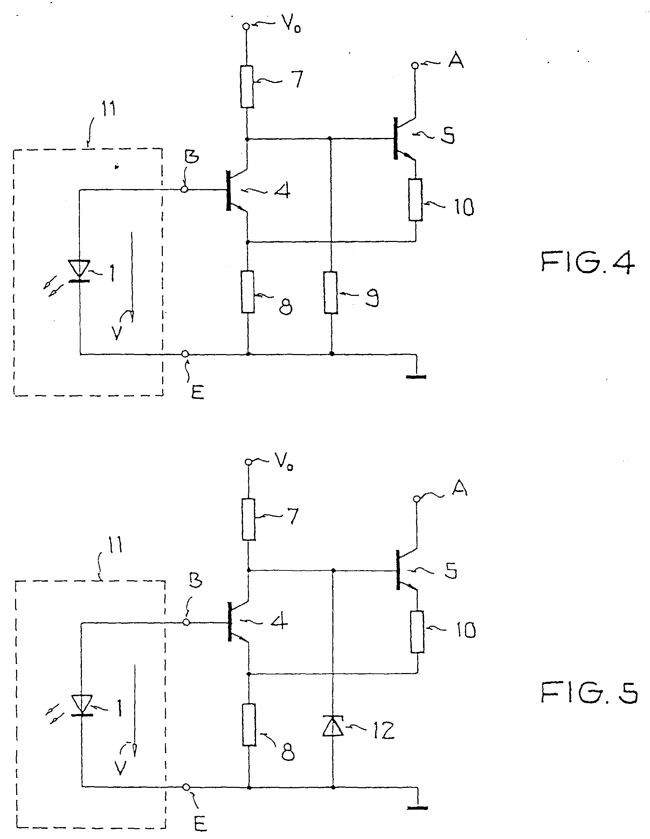

**Figur 3** zeigt eine weitere Variante der Prinzipschaltung von Figur 1. Hierbei bilden mehrere Infrarot-Sendedioden **1**, **2** die lichtempfindliche Einheit **11** zwischen den Punkten **B** und **E** des optoelektronischen Tageslichtsensors. Die Infrarot-Sendedioden **1**, **2** sind parallelgeschaltet. Bei einfallendem Tageslicht erhöht sich der Strom zwischen den Punkten B und E. Ersetzt diese empfindliche Einheit **11**, die in Figur 1 beschriebene Einheit, so erhöht sich auch der Kollektorstrom **I**_{C} durch den höheren Basisstrom. Die Empfindlichkeit des Systems verbessert sich.

**Figur 4** zeigt einen Lichtsensor mit Schmitt-Trigger-Funktion. Die Versorgungsspannung **V**₀ wird über einen Widerstand **7** an den Kollektor eines ersten NPN-Transistors **4** angelegt. Die Basis des ersten Transistors **4** ist mit der Anode der Infrarot-Sendediode **1** verbunden. Die Kathode der Infrarot-Sendediode **1** ist an Masse angeschlossen. Zwischen dem Emitter des Transistors und der Masse befindet sich ein weiterer Widerstand **8** Die Infrarot-Sendediode **1** bildet die lichtempfindliche Einheit **11** zwischen den Punkten **B** und **E** des optoelektronischen Tageslichtsensors. Der Kollektor des ersten Transistors **4** ist mit der Basis eines zweiten Transistors **5** verbunden. Der Emitter des zweiten Transistors **5** ist über einen weiteren in Reihe geschalteten Widerstand **10** mit dem Emitter des ersten Transistors **4** verbunden. An der Verbindung zwischen Kollektor des ersten Transistors **4** und der Basis des zweiten Transistors **5** wird ein weiterer Widerstand **9** angeschlossen und dann parallel zum ersten Transistor **4** und zum Widerstand **8** auf Masse gelegt. Der Ausgang dieser Schaltung befindet sich am Kollektor des zweiten Transistors. Diese Schaltung bildet einen Lichtsensor mit integriertem Schmitt-Trigger. An ihr kann direkt am Ausgang **A** eine Sparlampe angeschlossen werden, die sich bei Erreichen einer bestimmten Schaltschwelle automatisch einschaltet bzw. bei Unterschreitung ausschaltet. Das Über- bzw. Unterschreiten der Schaltschwelle ist abhängig von der Spannung, die sich in der Infrarot-Sendediode aufbaut. Diese Spannung ist wiederum abhängig von der Bestrahlungsstärke im Bereich von λ_{P} = 870 nm und damit von der Intensität des Tageslichts. Überschreitet die Tageslichtintensität und damit die Photospannung einen bestimmten Grenzwert, so wird die Spannung am Ausgang A auf Null absinken und die Sparlampe ausgeschaltet. Unterschreitet die Tageslichtintensität und damit die Photospannung diesen Grenzwert, so steht die Versorgungsspannung von 350 V am Ausgang **A** zur Verfügung. Die abgebildete Schaltung kann direkt an die gleichgerichtete Netzspannung (ca. 350 V) der Sparlampen Elektronik angeschlossen werden. Von Vorteil erweist sich der geringe Stromverbrauch. Er kann je nach Dimensionierung und Stromverstärkung der NPN-Transistoren auf unter 20 µA begrenzt werden, das heißt, der Leistungsverbrauch dieser Schaltung ist kleiner 7 mW (350 V * 20 µA).

**Figur 5** zeigt einen Lichtsensor mit Schmitt-Trigger-Funktion. Die Versorgungsspannung **V**₀ wird über einen Widerstand **7** an den Kollektor eines ersten NPN-Transistors **4** angelegt. Die Basis des ersten Transistors **4** ist mit der Anode der Infrarot-Sendediode **1** verbunden. Die Kathode der Infrarot-Sendediode **1** ist an Masse angeschlossen. Zwischen dem Emitter des Transistors und der Masse befindet sich ein weiterer Widerstand **8**. Die Infrarot-Sendediode **1** bildet die lichtempfindliche Einheit **11** zwischen den Punkten **B** und **E** des optoelektronischen Tageslichtsensors. Der Kollektor des ersten Transistors **4** ist mit der Basis eines zweiten Transistors **5** verbunden. Der Emitter des zweiten Transistors **5** ist über einen weiteren in Reihe geschalteten Widerstand **10** mit dem Emitter des ersten Transistors **4** verbunden. An der Verbindung zwischen dem Kollektor des ersten Transistors **4** und der Basis des zweiten Transistors **5** wird eine Zenerdiode **12** angeschlossen und dann parallel zum ersten Transistor **4** und zum Widerstand **8** auf Masse gelegt. Hierbei wird die Anode der Zenerdiode an Masse gelegt. Der Ausgang dieser Schaltung befindet sich am Kollektor des zweiten Transistors **5**. Diese Schaltung bildet einen Lichtsensor mit integriertem Schmitt-Trigger. An ihr kann direkt am Ausgang **A** eine Sparlampe angeschlossen werden, die sich bei Erreichen einer bestimmten Schaltschwelle automatisch einschaltet bzw. bei Unterschreitung ausschaltet. Das Über- bzw. Unterschreiten der Schaltschwelle ist abhängig von der Spannung, die sich in der Infrarot-Sendediode aufbaut. Diese Spannung ist wiederum abhängig von der Bestrahlungsstärke im Bereich von λ_{P} = 870 nm und damit von der Intensität des Tageslichts. Überschreitet die Tageslichtintensität und damit die Photospannung einen bestimmten Grenzwert, so wird die Spannung am Ausgang **A** auf Null absinken und die Sparlampe ausgeschaltet. Unterschreitet die Tageslichtintensität und damit die Photospannung diesen Grenzwert, so steht die Versorgungsspannung von 350 V am Ausgang **A** zur Verfügung. Die abgebildete Schaltung kann direkt an die gleichgerichtete Netzspannung (ca. 350 V) der Sparlampen-Elektronik angeschlossen werden. Von Vorteil erweist sich der geringe Stromverbrauch. Er kann je nach Dimensionierung und Stromverstärkung der NPN-Transistoren auf unter 20 µA begrenzt werden, das heißt der Leistungsverbrauch dieser Schaltung ist kleiner 7 mW (350 V * 20 µA).
Nicht abgebildet sind Weiterbildungen, die sich aus den Kombinationsmöglichkeiten der abgebildeten Ausführungsbeispiele ergeben.

Bei allen Anwendungen spielt es keine Rolle, ob die als Empfänger betriebene Sendediode im Bereich der sichtbaren oder unsichtbaren Strahlung empfindlich, also eigentlich eine lichtemittierende Diode (LED) oder Infrarotdiode ist.

Derartig aufgebaute Sensoren können nicht nur zur Unterscheidung zwischen Tageslicht und Kunstlicht, sondern auch generell zur Unterscheidung verschiedener Licht- und/oder Strahlungsquellen verwendet werden.

## Patentansprüche

1. Optoelektronischer Tageslichtsensor mit einer strahlungsempfindlichen Empfängereinheit, **dadurch gekennzeichnet**, **daß** die strahlungsempfindliche Empfängereinheit mindestens eine Halbleiter-Sendediode (1), insbesondere eine Infrarotdiode beinhaltet, die beim Bestrahlen mit Tageslicht eine von der Lichtstärke abhängige Fotospannung (V) erzeugt.

2. Optoelektronischer Tageslichtsensor nach Anspruch 1, **dadurch gekennzeichnet, daß** die strahlungsempfindliche Empfängereinheit die Spannungsquelle an der Basis eines Verstärkertransistors bildet.

3. Optoelektronischer Tageslichtsensor nach Anspruch 1, **dadurch gekennzeichnet, daß** die strahlungsempfindliche Empfängereinheit Bestandteil einer Schmitt-Trigger-Schaltung ist.

4. Beleuchtungseinrichtung mit einem optoelektronischer Tageslichtsensor nach einem der Ansprüche 1-3, wobei die Beleuchtungseinrichtung ein Scheinwerfer, eine Lampe, eine Glühbirne eine Leuchtstoffröhre oder eine Quecksilber Sparlampe ist.

5. Beleuchtungseinrichtung mit einem optoelektronischen Tageslichtsensor nach einem der Ansprüche 1-3, wobei der Tageslichtsensor direkt an die gleichgerichtete Netzspannung (V₀) angeschlossen ist, mit der die Beleuchtungseinrichtung betrieben wird.
